(19) Europäisches Patentamt / European Patent Office / Office européen des brevets

(11) **EP 2 611 998 B1**

(12) **EUROPEAN PATENT SPECIFICATION**

(45) Date of publication and mention
of the grant of the patent:
**08.07.2020 Bulletin 2020/28**

(21) Application number: **11822209.0**

(22) Date of filing: **23.08.2011**

(51) Int Cl.:
*F01N 3/023* *(2006.01)*    *F02D 41/02* *(2006.01)*
*F01N 3/10* *(2006.01)*    *F01N 9/00* *(2006.01)*
*F02D 41/14* *(2006.01)*    *F01N 13/00* *(2010.01)*

(86) International application number:
**PCT/SE2011/051009**

(87) International publication number:
**WO 2012/030274 (08.03.2012 Gazette 2012/10)**

(54) **METHOD AND SYSTEM FOR CONTROLLING THE MASS FLOW DURING REGENERATION OF A PARTICLE FILTER IN A POST-TREATMENT SYSTEM OF A COMBUSTION ENGINE**

VERFAHREN UND SYSTEM ZUR STEUERUNG DES MASSEFLUSSES WÄHREND DER REGENERATION EINES PARTIKELFILTERS IN EINEM NACHBEHANDLUNGSSYSTEM EINES VERBRENNUNGSMOTORS

PROCÉDÉ ET SYSTÈME DE COMMANDE DU DÉBIT MASSIQUE PENDANT LA RÉGÉNÉRATION D'UN FILTRE À PARTICULES DANS UN SYSTÈME DE TRAITEMENT ULTÉRIEUR D'UN MOTEUR À COMBUSTION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.08.2010 SE 1050890**

(43) Date of publication of application:
**10.07.2013 Bulletin 2013/28**

(73) Proprietor: **Scania CV AB**
**151 87 Södertälje (SE)**

(72) Inventors:
• **KARLSSON, Carl-Johan**
**S-112 40 Stockholm (SE)**
• **TELBORN, Klas**
**S-152 71 Södertälje (SE)**

(74) Representative: **Scania CV AB**
**Patents, GP 117kv**
**151 87 Södertälje (SE)**

(56) References cited:
EP-A1- 0 389 891    EP-A1- 0 389 891
EP-A1- 1 491 750    EP-A1- 1 515 027
EP-A1- 1 744 042    EP-A1- 1 744 042
EP-A1- 1 980 738    WO-A1-2006/003339
WO-A1-2007/145553    US-A1- 2003 145 582
US-A1- 2003 230 060    US-A1- 2005 198 945
US-A1- 2005 223 699    US-A1- 2006 096 280
US-A1- 2006 117 740    US-A1- 2007 199 312
US-A1- 2008 307 771    US-A1- 2010 293 923
US-A1- 2011 099 997

**Description**

**Field of the invention**

The present invention relates to particle filters and in particular to a method for regeneration of particle filters according to the preamble of claim 1. The invention relates also to a system and a vehicle.

**Background to the invention**

Growing official concern about pollution and air quality, especially in urban areas, has led to the adoption of emission standards and rules in many jurisdictions.

Such emission standards often set requirements which define acceptable limits for exhaust discharges from vehicles equipped with combustion engines. These standards often regulate, for example, levels of discharge of nitrogen oxides ($NO_x$), hydrocarbons (HC), carbon monoxide (CO) and particles from most types of vehicles.

The endeavour to meet such emission standards has led to ongoing research with a view to reducing emissions by means of post-treatment (cleaning) of the exhaust gases which arise from combustion in a combustion engine.

One way to post-treat exhaust gases from a combustion engine is a so-called catalytic cleaning process, so vehicles and many other at least large means of transport ships powered by combustion engines are usually also provided with at least one catalyst.

Post-treatment systems may also, either alternatively or in combination with one or more catalysts, comprise other components, e.g. particle filters. There are also cases where particle filters and catalysts are integrated with one another. US2006/0117740 A1 discloses computation of a flow rate of the exhaust gas flowing through the diesel particle filter during regeneration so that the temperature of the DPF is kept at a temperature at which the DPF can be regenerated, the flow rate being adjusted by adjusting the fresh air flow rate and the exhaust heating realised by post injection.

US 2003/0145582 A1 discloses a hybrid vehicle where the temperature of the particle filter during regeneration is controlled by the engine speed and load where the ratio of electrical power and engine power is modified to control the exhaust gas temperature.

In EP 0 389 891, regenerating air and fuel are added directly and separately to the particle filter, not via the engine, and the flow rate of regenerating air is determined in relation to atmospheric pressure and temperature.

Combustion of fuel in the cylinders of a combustion engine results in the formation of soot particles. Particle filters are used to capture these soot particles, and work in such a way that the exhaust flow is led through a filter structure whereby soot particles are captured from the passing exhaust flow and are stored in the particle filter.

The particle filter fills with soot progressively during vehicle operation, and has sooner or later to be emptied of it, which is usually achieved by so-called regeneration.

Regeneration involves the soot particles, which mainly consist of carbon particles, being converted to carbon dioxide and/or carbon monoxide in one or more chemical processes, which regeneration may in principle be effected in two different ways. One way is regeneration by so-called oxygen ($O_2$) based regeneration, also called active regeneration. In active regeneration, carbon is converted by oxygen to form carbon dioxide and water.

This chemical reaction requires relatively high particle filter temperatures for desired reaction rates (filter emptying rates) to be achieved at all.

Instead of active regeneration, it is possible to apply $NO_2$ based regeneration, also called passive regeneration. In passive regeneration, nitrogen oxides and carbon oxides are formed by a reaction between carbon and nitrogen dioxide. The advantage of passive regeneration is that desired reaction rates, and hence the rate at which the filter is emptied, can be achieved at significantly lower temperatures.

As regeneration is temperature-dependent, both types involve measures to raise the temperature of the particle filter and thereby achieve quicker regeneration. In favourable operating conditions, this regeneration may be effected during operation, substantially without adversely affecting the vehicle's driver.

However, there are situations/operating circumstances in which the vehicle's operation is such that regeneration cannot be done effectively while it is in motion. Even if the vehicle may periodically run in conditions which are favourable from the regeneration point of view, it may also be the case that such conditions occur at too long intervals or for too short periods of time. This means that the particle filter will sooner or later reach such a degree of filling that regeneration has to be done for the vehicle to be drivable in a safe and desired way.

Such situations may then entail the vehicle having to be halted for so-parked regeneration, i.e. regeneration with the vehicle stationary.

However, it is desirable that regeneration when the vehicle is stationary be carried out as quickly as possible, and also in such a way that on each occasion the regeneration takes substantially the same amount of time, so that the driver will know how long the regeneration will take. This also makes it possible to ensure that at the end of the regeneration the particle filter will have been emptied to a desired extent.

This may however involve a difficulty, particularly in passive regeneration. During stationary passive regeneration the temperature of the particle filter is raised at least by adding unburnt fuel to the exhaust flow, which fuel is then allowed to oxidise (burn) in the post-treatment system in order to generate heat which raises the filter's temperature. However, this oxidation of fuel has adverse effects on the formation of the nitrogen dioxide required for passive regeneration, making it difficult to achieve desired regeneration rates.

There is thus a need for an improved solution for passive regeneration of particle filters.

## Summary of the invention

An object of the present invention is to propose a method for regeneration of particle filters in an effective way. This object is achieved by a method according to the characterising part of claim 1.

The present invention relates to a method pertaining to regeneration of a particle filter in a post-treatment system of a vehicle, which filter is adapted to treatment of an exhaust mass flow arising from combustion in a combustion engine which is supplied with air for said combustion.

The method comprises the steps of

- during NO2 based regeneration of the particle filter when the vehicle is stationary,
- determining a representation of a temperature of the air supplied for the combustion,
- determining a representation of a pressure of the air supplied for the combustion,
- supplying unburnt fuel during said regeneration to said exhaust mass flow which arises from said combustion,
- on the basis of said representations of temperature and pressure of said air supplied for said combustion, controlling said engine so that the magnitude of the exhaust mass flow arising from the combustion substantially corresponds to a first value, which engine is controlled so that the magnitude of the exhaust mass flow arising from the combustion corresponds substantially to said first value at least partly by controlling the speed of said engine, and
- setting the speed of the engine so that the magnitude of the exhaust mass flow arising from the combustion corresponds to said first value during a first period of time during the NO2 based regeneration of the particle filter.

The present invention affords the advantage that controlling the engine's speed on the basis of the temperature and pressure of the air supplied for the combustion makes it possible for the exhaust mass flow to be controlled towards a specific value at which this mass flow can be maintained during regeneration whatever the prevailing ambient conditions. Thus it is possible, irrespective of whether the vehicle is in warm or cold surroundings, and irrespective of whether the prevailing air pressure is high or low, to always achieve substantially the same exhaust mass flow. It is thus also possible to ensure that the regeneration will always take substantially the same amount of time.

Said first value may be determined in suitable ways. The exhaust mass flow which from a regeneration perspective in passive regeneration represents a favourable flow depends on the ability of the post-treatment system to convert NO to $NO_2$. This depends for example on the size of the oxidation catalyst which is usually part of the post-treatment system (i.e. the total surface area of the catalyst's surfaces which are coated with noble metal). The present invention is also applicable in systems which have no oxidation catalyst and in which conversion of NO to $NO_2$ either takes place in the particle filter or is achieved by some other suitable means. The larger the oxidation catalyst (and/or the particle filter's surfaces coated with noble metal), the larger the exhaust mass flow which can be set without the conversion of NO to $NO_2$ being too adversely affected during the catalyst's oxidation of unburnt fuel in the exhaust flow.

Determining said first value may therefore for example be done by testing the catalyst at various exhaust mass flows with simultaneous supply of unburnt fuel, making it possible for the resulting $NO_2$ conversion to be determined for various flows and thereby to determine the optimum flow, i.e. the mass flow at which highest regeneration rates are reached.

The optimum exhaust mass flow may for example be stored in the vehicle's control system for use as set-point value during parked regeneration.

According to the invention, the flow during regeneration also depends on the amount of unburnt fuel supplied to the exhaust flow, so an embodiment applies different set-point values for different amounts of fuel for supply to the exhaust flow.

Further characteristics of the present invention and advantages thereof are indicated by the detailed description set out below of embodiment examples and the attached drawings.

## Brief description of the drawings

Fig. 1a     depicts a power train of a vehicle in which the present invention may with advantage be used.

Fig. 1b     depicts an example of a control unit in a vehicle control system.

Fig. 2      depicts an example of a post-treatment system in a vehicle in which the present invention may with advantage be used.

Fig. 3      depicts an example of regeneration rate (soot burn-out rate) as a function of amounts of soot in the particle filter, and its temperature dependency.

Fig. 4      depicts the temperature dependency of oxidation of nitrogen oxide to nitrogen dioxide in an oxidation catalyst.

Fig. 5      is a schematic diagram of a method according to an example of an embodiment of the present invention.

**Detailed description of preferred embodiments**

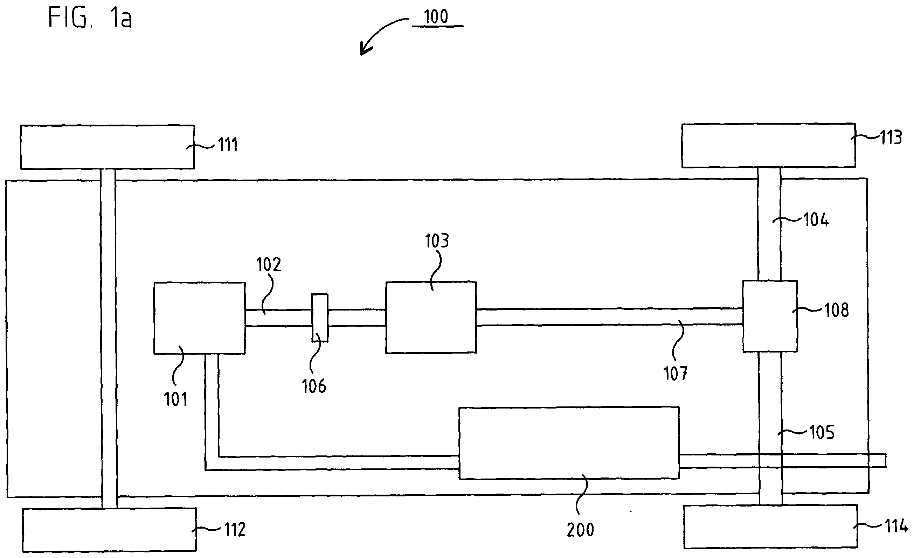

Fig. 1a depicts schematically a heavy vehicle 100, e.g. a truck, bus or the like, according to an example of an embodiment of the present invention. The vehicle 100 schematically depicted in Fig. 1a comprises a pair of forward wheels 111, 112 and a pair of powered rear wheels 113, 114. The vehicle further comprises a power train with a combustion engine 101 connected in a conventional way, by an output shaft 102 of the engine 101, to a gearbox 103, e.g. via a clutch 106.

An output shaft 107 from the gearbox 103 drives the powered wheels 113, 114 via a final gear 108, e.g. a conventional differential, and driveshafts 104, 105 which are connected to said final gear 108.

The vehicle 100 further comprises a post-treatment (exhaust cleaning) system 200 for treatment (cleaning) of exhaust discharges from the engine 101.

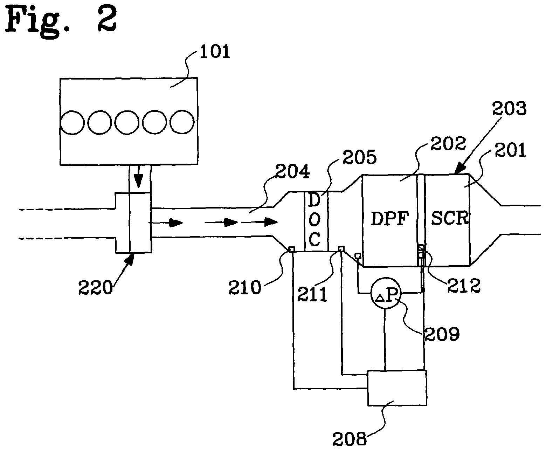

The post-treatment system is depicted in more detail in Fig. 2. The diagram illustrates the engine 101 of the vehicle 100, in which the exhaust gases generated by the combustion are led via a turbo unit 220 (in turbo engines the exhaust flow arising from the combustion often drives a turbo unit used to compress the incoming air for the combustion in the cylinders). The function of turbo units is very well known and is therefore not described in more detail here. The exhaust flow is then led via a pipe 204 (indicated by arrows) to a particle filter (diesel particulate filter, DPF) 202 via an oxidation catalyst (diesel oxidation catalyst, DOC) 205.

The post-treatment system further comprises an SCR (selective catalytic reduction) catalyst 201 situated downstream of the particle filter 202. SCR catalysts use ammonia ($NH_3$), or a compound from which ammonia can be generated/formed, as additive for reducing the amount of nitrogen oxides $NO_x$.

The particle filter 202 may alternatively be situated downstream of the SCR catalyst 201, although this may be less advantageous in cases where the present invention relates to so-called passive regeneration which is dependent on the nitrogen oxides which are usually reduced by the SCR catalyst. According to an embodiment of the present invention, the post-treatment system does not comprise an SCR catalyst at all.

The oxidation catalyst DOC 205 has several functions and utilises the surplus air to which the diesel engine process generally gives rise in the exhaust flow as a chemical reagent in conjunction with a noble metal coating in the oxidation catalyst. The catalyst is normally used primarily to oxidise remaining hydrocarbons and carbon monoxide in the exhaust flow to carbon dioxide and water. The oxidation of hydrocarbons (i.e. unburnt fuel) results also in the formation of heat which is utilised by the present invention to raise the temperature of the particle filter by adding fuel to the exhaust flow, which fuel is then allowed to burn across the catalyst in order to generate heat which raises the temperature of the filter to a desired level.

The fuel may be supplied to the exhaust flow by injection in the engine's combustion chambers (e.g. conventional cylinders), late during the combustion stage of the combustion cycle, such that the fuel injected late is ignited to only a small extent, or not at all, and at least the major part of the fuel injected is thus supplied to the exhaust flow as unburnt fuel.

This method for raising the temperature of the particle filter is also applied in active regeneration.

The oxidation catalyst may also oxidise to nitrogen dioxide ($NO_2$) a large proportion of the nitrogen monoxides (NO) present in the exhaust flow. This nitrogen dioxide is then utilised in passive regeneration according to the present invention. Further reactions may also take place in the oxidation catalyst.

In the embodiment depicted, DOC 205, DPF 202 and also the SCR catalyst 201 are integrated in a combined exhaust cleaning unit 203. It should however be noted that DOC 205 and DPF 202 need not be integrated in a combined exhaust cleaning unit but may instead be arranged in some other way found appropriate. For example, DOC 205 may be situated nearer to the engine 101.

The SCR catalyst may likewise be separate from DPF 202 and/or DOC 205.

The post-treatment system set-up depicted in Fig. 2 usually occurs in heavy vehicles, at least in jurisdictions where stringent emission requirements apply, but as an alternative to the oxidation catalyst the particle filter may instead be provided with noble metal coatings so that the chemical processes which would occur in the oxidation catalyst occur

EP 2 611 998 B1

instead in the particle filter, and the post-treatment system therefore has no DOC.

As previously mentioned, the combustion in the engine 101 results in the formation of soot particles. These soot particles need not, and are in many cases not allowed to, be discharged into the surroundings of the vehicle. Diesel particles consist of hydrocarbons, carbon (soot) and inorganic substances such as sulphur and ash. As mentioned above, these soot particles are therefore captured by the particle filter 202, which works in such a way that the exhaust flow is led through a filter structure in which soot particles are captured from the passing exhaust flow in order to be stored in the filter 202. A very large proportion of the particles may be separated from the exhaust flow by the filter 202.

The particles thus separated from the exhaust flow therefore accumulate in the filter 202, causing it to fill with soot over time. Depending on factors such as current driving conditions, the driver's mode of driving and the vehicle's load, a larger or smaller amount of soot particles will be generated, so this filling will take place more or less quickly, but when the filter reaches a certain level of filling it needs "emptying". If the filter is full to too high a level the vehicle's performance may be affected and there may also be fire hazards due to soot accumulation in combination with high temperatures.

As above, emptying the particle filter 202 is done by regeneration whereby soot particles, carbon particles, are converted in a chemical process to, depending on whether the regeneration is of active or passive type, carbon dioxide and/or nitrogen oxide and carbon monoxide. Over time the filter 202 has therefore to be regenerated at more or less regular intervals, and determining suitable times for its regeneration may for example be by means of a control unit 208 which may for example determine a suitable time or times at least partly on the basis of signals from a pressure sensor 209 which measures the differential pressure across the filter. The fuller the filter 202 becomes, the higher the pressure difference across it will be.

No regeneration action is normally taken so long as the filter's filling level remains below some predetermined level. For example, the control system's control of filter regeneration may be so arranged that no action is taken so long as the filter's degree of filling is for example below some suitable level within the range 60-80%. The degree of filling may be estimated in any suitable way, e.g. on the basis of differential pressure as above, in which case a certain pressure difference will represent a certain degree of filling.

The control unit 208 also controls the regeneration process according to the present invention, as described in more detail below.

Generally, control systems in modern vehicles usually comprise a communication bus system consisting of one or more communication buses for connecting together a number of electronic control units (ECUs), or controllers, and various components located on the vehicle. Such a control system may comprise a large number of control units, and the responsibility for a specific function may be divided among two or more of them.

For the sake of simplicity, Fig. 2 depicts only the control unit 208, but vehicles of the type depicted often have a relatively large number of control units, e.g. for control of engine, gearbox etc., as is well known to specialists within the technical field.

The present invention may be implemented in the control unit 208 but may also be implemented wholly or partly in one or more other control units with which the vehicle is provided.

Control units of the type depicted are normally adapted to receiving sensor signals from various parts of the vehicle, e.g., as depicted in Fig. 2, said pressure sensor 209 and temperature sensors 210-212, and also, for example, an engine control unit (not depicted). The control signals generated by control units normally depend also both on signals from other control units and on signals from components. For example, the control exercised by the control unit 208 over regeneration according to the present invention may for example depend on information received for example from the engine control unit and the temperature/pressure sensors depicted in Fig. 2.

Control units of the type depicted are also usually adapted to delivering control signals to various parts and components of the vehicle, e.g. in the present example to the engine control unit to demand/order control of the engine's combustion as below.

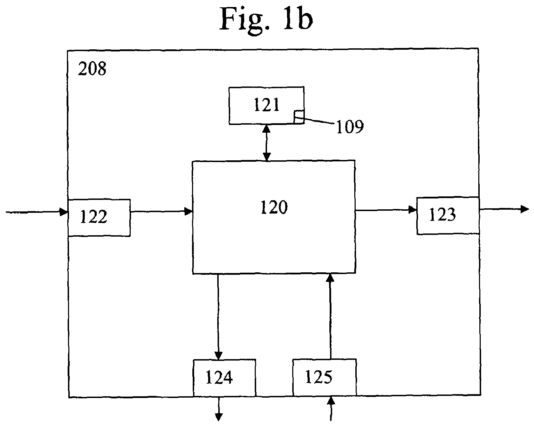

The control is often governed by programmed instructions. These instructions take typically the form of a computer programme which, when executed in a computer or control unit, causes the computer/control unit to effect desired forms of control action, e.g. method steps according to the present invention. The computer programme usually takes the form of a computer programme product 109 which is stored on a digital storage medium 121 (see Fig. 1b), e.g. ROM (read-only memory), PROM (programmable read-only memory), EPROM (erasable PROM), flash memory, EEPROM (electrically erasable PROM), a hard disc unit etc., in or connected to the control unit, and which is executed by the control unit. The vehicle's behaviour in a specific situation may thus be adjusted by altering the computer programme's instructions.

An example of a control unit (the control unit 208) is depicted schematically in Fig. 1b, which control unit 208 may itself comprise a calculation unit 120 which may take the form of substantially any suitable type of processor or microcomputer, e.g. a circuit for digital signal processing (Digital Signal Processor, DSP), or a circuit with a predetermined specific function (Application Specific Integrated Circuit, ASIC). The calculation unit 120 is connected to a memory unit 121 which provides it with, for example, the stored programme code 109 and/or the stored data which the calculation unit 120 needs for it to be able to perform calculations. The calculation unit 120 is also arranged to store partial or final results of calculations in the memory unit 121.

The control unit 208 is further provided with respective devices 122, 123, 124, 125 for receiving and sending input and output signals. These input and output signals may comprise waveforms, pulses or other attributes which the input signal receiving devices 122, 125 can detect as information and which can be converted to signals which the calculation unit 120 can process.

These signals are thereafter conveyed to the calculation unit 120. The output signal sending devices 123, 124 are arranged to convert signals received from the calculation unit 120 in order, e.g. by modulating them, to create output signals which can be conveyed to other parts of the vehicle's control system and/or the component/components for which the signals are intended. Each of the connections to the respective devices for receiving and sending input and output signals may take the form of one or more from among a cable, a data bus, e.g. a CAN (Controller Area Network) bus, a MOST (Media Orientated Systems Transport) bus or some other bus configuration, or a wireless connection.

As above, regeneration may in principle be effected in two different ways. One way is by so-called oxygen ($O_2$) based regeneration, also called active regeneration. In active regeneration a chemical process takes place substantially as follows:

$$C + O_2 = CO_2 + heat \qquad\qquad (eq.\ 1)$$

Active regeneration thus converts carbon plus oxygen gas to carbon dioxide plus heat. However, this chemical reaction is very temperature-dependent and requires relatively high filter temperatures for acceptable reaction rates to be achieved at all. A lowest filter temperature of 500°C is typically required, but a still higher temperature is preferable for regeneration to take place at desired rates.

However, the maximum temperature usable in active regeneration is often limited by tolerances of the components concerned. For example, the particle filter 202 and/or any downstream SCR catalyst often have design limitations with regard to the maximum temperature to which components may be subjected. This means that active regeneration may, owing to components affected, be subject to an unacceptably low maximum permissible temperature. At the same time, a very high lowest temperature is therefore required for any usable reaction rate to be achieved at all. In active regeneration, the soot load in the filter 202 is normally burnt substantially completely. After total regeneration of the filter, its soot level will be substantially 0%.

It is now increasingly common that vehicles are equipped not only with particle filters 202 but also with SCR catalysts 201, in which case active regeneration may entail problems in the form of overheating of the downstream SCR catalyst treatment process.

At least partly for this reason, the present invention applies $NO_2$ based (passive) regeneration instead of the active regeneration described above. In passive regeneration, nitrogen oxides and carbon oxides are formed in a reaction between carbon and nitrogen dioxide as follows:

$$NO_2 + C = NO + CO \qquad\qquad (eq.\ 2)$$

The advantage of passive regeneration is that desired reaction rates, and hence the rate at which the filter is emptied, are achieved at lower temperatures. Passive regeneration of particle filters typically takes place at temperatures within the range 200°C - 500°C, although temperatures in the upper part of this range are normally preferable. This substantially lower temperature range than in active regeneration is nevertheless a great advantage in cases where, for example, there are SCR catalysts, since it entails no risk of reaching such a high temperature level as to cause risk of damage to the SCR catalyst. It is nevertheless still important that a relatively high temperature be achieved as above, and the present invention relates to a method for avoiding regeneration in situations where effective regeneration is not deemed possible.

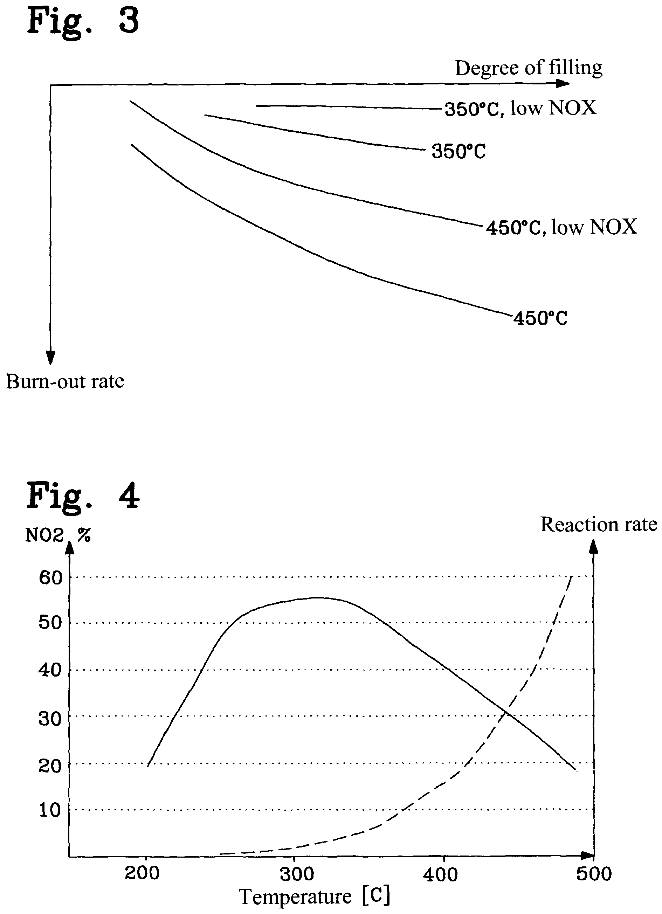

Fig. 3 depicts an example of regeneration rate (soot burn-out rate) as a function of amounts of soot in the particle filter 202 in operating situations at two different temperatures (350°C and 450°C). The regeneration rate is also exemplified for respective low and high concentrations of nitrogen dioxide. As may be seen in the diagram, the burn-out rate is low at low temperature (350°C) and low concentration of nitrogen dioxide. The temperature dependency of the regeneration rate is clearly indicated by the burn-out rate being relatively low even at high concentrations of nitrogen dioxide so long as the filter temperature is low. Burn-out rates are substantially higher at 450°C even in the case of low concentration of nitrogen dioxide, although high contents of nitrogen dioxide are obviously preferable.

However, passive regeneration depends not only on the particle filter's temperature and amount of soot as in Fig. 3 but also, as indicated by equation 2 above and Fig. 3, on access to nitrogen dioxide. However, the proportion of

nitrogen dioxide ($NO_2$) to the total amount of nitrogen oxides ($NO_x$) generated by the engine's combustion is normally only about 0 - 10%. When the engine is under heavy load, the proportion of $NO_2$ may be as low as 2 - 4%. With the object of achieving rapid regeneration of the filter, it is therefore desirable that the proportion of nitrogen dioxide in the exhaust flow entering the filter 202 be as high as possible.

It is therefore desirable to increase the amount of nitrogen dioxide $NO_2$ in the exhaust flow arising from the engine's combustion. There are several different ways of effecting this conversion, and it may be achieved by means of the oxidation catalyst 205, in which nitrogen oxide can be oxidised to nitrogen dioxide.

However, oxidation of nitrogen oxide to nitrogen dioxide in the oxidation catalyst is also a very temperature-dependent process, as exemplified in Fig. 4. As may be seen in the diagram, it is possible at favourable temperatures for the proportion of nitrogen dioxide to the total amount of nitrogen oxides in the exhaust flow to be increased to nearly 60%. As the diagram also shows, a temperature of the order of 250-350°C would therefore be optimum in passive regeneration for achieving as much oxidation of nitrogen oxide to nitrogen dioxide as possible.

As described in relation to equation 2 and Fig. 3, however, a completely different temperature situation applies to the actual burn-out process. This temperature situation is represented by a broken line in Fig. 4 and, as may be seen, the reaction rate may be regarded as virtually non-existent at particle filter temperatures below 200-250°. It should however be noted that the temperature indications referred to are merely examples and that actual values may differ from them. For example, the way in which the temperatures are determined/calculated might affect the temperature limits. Some ways of determining the filter's temperature are exemplified below.

If there is free access to nitrogen dioxide, as high a filter temperature as possible would therefore be preferable. As may also be seen in Fig. 4, however, this leads to low oxidation of nitrogen oxide to nitrogen dioxide. This means that the regeneration will not be able to derive full benefit from the high filter temperature, since the reaction will be limited by shortage of nitrogen dioxide. It is however still the case, according to the broken line in Fig 4, that the particle filter has to reach at least a lowest temperature for regeneration within a reasonable time to be possible. For this reason, measures to raise the temperature of the filter are also applied as above.

The temperature-raising measures may be achieved by controlling the engine in such a way as to result in a high exhaust temperature, which is done by lowering the engine's efficiency to a low level so that a large portion of the energy changes to heat. Although heat-raising measures of this kind are often sufficient in regeneration during operation, there are, as previously mentioned, situations/operating circumstances in which regeneration while the vehicle is in motion cannot be done effectively and therefore has to be done in the form of so-called parked regeneration, i.e. regeneration with the vehicle stationary.

In regeneration with the vehicle stationary, the resulting exhaust temperature does not become high enough to be able to achieve desired regeneration rates solely by controlling the engine's efficiency even during passive regeneration, as raising the temperature of the particle filter to a desired level entails adding to the exhaust flow fuel which thereafter generates heat during oxidation in the catalyst.

There are various possible ways of injecting fuel into the exhaust flow. For example, it may be done by means of an injector in the exhaust system, e.g. in an exhaust pipe. Alternatively, fuel may be injected in the engine's combustion chambers. The present invention is applicable irrespective of how unburnt fuel is supplied to the exhaust flow. Such fuel injection is described in prior art.

In cases where fuel is injected into a cylinder, it is injected at high pressure. For the fuel to accompany the exhaust flow in an unburnt state, it has to be injected late during the combustion, at a stage when a relatively large proportion of the cylinder wall is exposed (the piston being far down in the cylinder). This means that the fuel injected at high pressure will reach the cylinder walls and wash away the oil film present on them. The walls of the engine's cylinders have normally to be provided with a thin oil film to lubricate the piston's up and down movements in the cylinder and thereby reduce wear. Washing away this oil film, also known as "wall wetting", thus reduces the possibility of lubrication, leading to risk of wear. This problem may be mitigated by injection during regeneration according to the present invention being controlled in such a way that instead of fuel being supplied at each combustion, e.g. at each combustion stroke in a four-stroke engine/diesel engine, larger amounts of fuel are injected at fewer combustions. For example, double the amount of fuel might be injected at every second combustion (combustion stroke), treble the amount at every third combustion (combustion stroke) etc.

Supplying unburnt fuel to the exhaust flow in order to warm a particle filter suring passive regeneration entails also a further disadvantage. As above, oxidation of unburnt fuel adversely affects the formation of $NO_2$ in the catalyst in that the catalyst will initially effect oxidation of HC (fuel) and only thereafter, if capacity remains, will it form $NO_2$. As the formation of $NO_2$ is markedly reduced or even totally lacking during oxidation of fuel, an important parameter for regeneration according to equation 2 above is thus likewise totally lacking.

In parked passive regeneration, supply of fuel to the exhaust flow needs to proceed continuously for it to be possible to maintain desired temperatures, resulting in $NO_2$ formation problems as above.

At the same time, in parked regeneration it is desirable that the regeneration take place as quickly as possible so that the vehicle can then resume normal operation. The present invention provides a method whereby parked regeneration follows a regeneration profile for a predetermined period of time. It is thus possible to ensure that regeneration actually takes place to a desired and expected extent. The present invention results in a high regeneration rate during passive regeneration by setting an operating point which causes a high $NO_2$ flow into the particle filter despite supply of unburnt fuel to the exhaust flow.

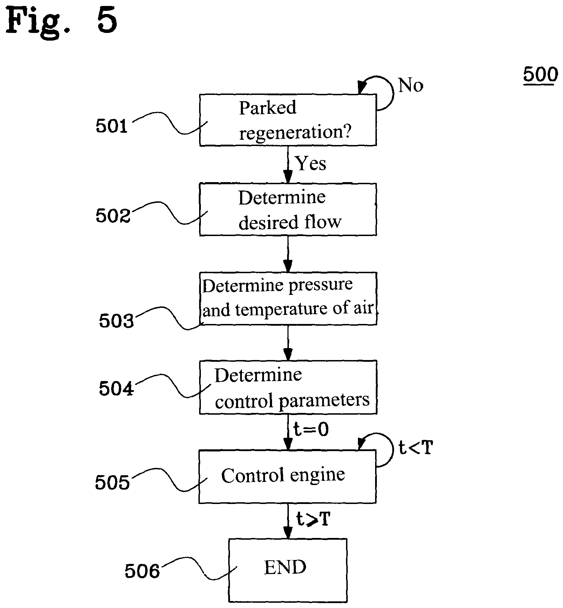

Fig. 5 illustrates a method example 500 according to the present invention.

The method begins at step 501, which determines whether parked regeneration is to take place. This may for example be done by determining whether the differential pressure across the particle filter exceeds a certain level. Alternatively the determination may for example be triggered by conditions for regeneration while the vehicle is in motion not being fulfilled and/or by a number of regeneration attempts having been made without success.

In cases where parked regeneration is to be carried out, the method moves on to step 502.

To reach a desired regeneration rate in parked passive regeneration, unburnt fuel has to be supplied to the exhaust flow to achieve desired particle filter temperatures. The unburnt fuel becomes oxidised as described above, thereby forming heat to warm the particle filter.

As also described above, oxidation of fuel in the catalyst adversely affects the formation of nitrogen dioxide. To achieve a high $NO_2$ flow, a high proportion of $NO_x$ has to be created during the combustion while at the same time the exhaust mass flow is high. However, a high mass flow means that the catalyst, as seen from the exhaust flow's perspective, becomes "smaller", resulting in less $NO_2$ conversion, i.e. the $NO_2$ conversion in the catalyst decreases with the flow when unburnt fuel is at the same time supplied to the exhaust flow.

If the exhaust mass flow is low, the catalyst will conversely seem larger from the exhaust flow's perspective, since available catalyst capacity will then be large relative to the exhaust mass flow. When conversely the mass flow is high, the oxidation catalyst will be fully occupied with oxidation of unburnt fuel, since this process takes place before conversion of nitrogen oxide to nitrogen dioxide. When there is high mass flow, the resources of the catalyst may be entirely devoted to oxidation of fuel, leaving no resources for conversion of nitrogen oxide to nitrogen dioxide.

To achieve as rapid regeneration as possible, it is therefore important that the exhaust mass flow be set as high as possible for regeneration to proceed as quickly as possible while at the same time the flow is low enough for the conversion of NO to $NO_2$ to take place to a desired extent when there is unburnt fuel in the exhaust flow.

Thus the exhaust mass flow which is favourable from a regeneration perspective depends on the size of the catalyst. The larger the catalyst, the greater the exhaust mass flow which can be set without too adversely affecting the conversion of NO to $NO_2$. Parked regeneration allows greater freedom of control of the exhaust flow, so it is desirable that the exhaust mass flow be set in as optimum a way as possible.

Step 502 therefore determines desired exhaust mass flow. This flow may for example be determined beforehand and be stored in the vehicle's control system. Flow determination may for example be done by testing the catalyst at different exhaust mass flows with simultaneous supply of unburnt fuel, and the resulting $NO_2$ conversion might be determined for different flows, making it possible to determine an optimum flow, i.e. the flow at which the regeneration rate is highest. At the same time, the pressure and temperature at which the air supplied for the combustion will be during optimum flow are determined. These values are likewise stored in the control system.

The value determined at step 502 is then used as set-point value during the parked regeneration.

Even if the engine is controlled in an identical way (i.e. same engine speed, fuel injection etc.), this does not mean that the exhaust mass flow will automatically be always the same. This is because the exhaust mass flow depends not only on engine control parameters but also to a great extent on the temperature of the air supplied for the combustion, and also on prevailing air pressure. For example, the air in the surroundings of the vehicle, and hence the air supplied for the vehicle's combustion, will be at a lower density on a warm summer day than on a cold winter day. This means that at the same engine speed the exhaust mass flow will be less in summer than in winter. The same also applies to prevailing air pressure in that low air pressure will result in less exhaust mass flow.

For example, if the prevailing temperature on a warm summer day is +30°C, the difference (decrease in flow) compared with a cold winter day with a prevailing temperature of -20°C will be

$$\frac{273.15 + (-20)}{273.15 + 30} \approx 0.84 \qquad (\text{eq. 3})$$

In other words, on a warm summer day the exhaust mass flow will be only about 84% of that on a cold winter day with the same engine control.

Similarly, the exhaust mass flow on a day of low air pressure, e.g. 700 millibar, will be proportionally less than at, for example, 1000 millibar, as follows:

$$\frac{700}{1000} = 0.70 \qquad\qquad (eq. \ 4)$$

Both separately, but above all in combination, the current pressure and temperature of the air supplied for the combustion do have a very substantial effect on the resulting exhaust mass flow.

The exhaust mass flow may differ by 40% or more between different ambient conditions, and regeneration may take place in any ambient conditions.

It is therefore unlikely that the engine control parameters prevailing at the time of determination of optimum exhaust mass flow for the catalyst will also result in optimum exhaust mass flow in the ambient conditions prevailing when regeneration actually takes place.

The present invention therefore determines at step 503 a representation of prevailing air temperature and prevailing air pressure and then moves on to step 504, which determines applicable engine control parameters on the basis of desired exhaust mass flow and prevailing temperature and pressure.

The representation of the air pressure and temperature may for example be determined by means of sensors for monitoring of temperature and pressure in the vehicle's surroundings. Alternatively, the representation of the air pressure and temperature may for example be determined by means of sensors which measure temperature and pressure at or upstream of the engine's air intake. For example, representations of temperature and pressure of the air supplied for the combustion may be detemined by means of sensors situated upstream of a turbo unit or some other supercharging unit for pressurisation of the air supplied for the combustion.

According to the present invention, the engine is therefore controlled with air pressure and temperature as input parameters. An embodiment uses an algorithm for taking the predetermined exhaust mass flow at the then prevailing air pressure and temperature as a basis for calculating suitable parameters for achieving the exhaust mass flow corresponding to the air pressure and temperature determined at step 503.

An embodiment enables engine control data to be stored for various different air pressures and/or temperatures, in which case the vehicle's control system may for example consult tabulated reference data to determine suitable engine control parameters for achieving desired exhaust mass flows during regeneration.

The exhaust mass flow arising in constant temperature and pressure conditions depends on the engine speed, so at least in cases where injection angles etc. are the same, regulation of the exhaust mass flow may be by varying the engine's speed according to prevailing pressure and temperature.

The method then moves on to step 505 which controls the engine's speed according to the value determined at step 504 so that regeneration takes place at a desired rate. The engine speed may for example be determined on the basis of a relation between engine speed and flow which describes how the flow changes with engine speed. This representation may for example be in tabular form or in the form of a mathematical expression. At the same time as the method moves on to step 505, a timer t is started.

The present invention thus allows regeneration to achieve the same results irrespective of ambient conditions. In other words, by controlling the exhaust mass flow it is possible to ensure that regeneration takes the same amount of time irrespective of the pressure and/or temperature of the surroundings. Thus it is also possible to ensure that regeneration actually takes place to a desired extent. When the timer t reaches a time T at which regeneration is deemed completed, the regeneration ends at step 506.

Current exhaust mass flow may also be determined by means of an air mass sensor for determination of an air flow to which the fuel flow is then added (exhaust mass flow = air flow + fuel flow), making it possible for the fuel flow to be calculated on the basis of knowing the amount of fuel injected during combustion. Determination of air flow may also for example be by means of a model based in a known way on, for example, charge pressure, charge temperature, engine speed. This flow determined may then be used in controlling the engine to achieve desired exhaust mass flow.

In certain cases it may also be desirable to control the exhaust mass flow towards a flow which results in a lower than maximum regeneration rate.

Injection of unburnt fuel may take place independently of the fuel supplied for the actual combustion. However, the exhaust mass flow will depend on the amount of air supplied for the combustion, so control of the actual combustion is limited to control towards operating points at which desired flows can arise. It may however be possible to use injection times (injection angles) to influence the amount of nitrogen oxides arising during the combustion. An embodiment therefore controls the engine's combustion in such a way that as high a proportion of nitrogen oxides as possible arises while at the same time desired flows are maintained. It is generally the case in prior art that a larger proportion of nitrogen oxides arising means that the engine is being controlled towards a higher efficiency.

The flow most advantageous during regeneration depends also on the amount of unburnt fuel supplied to the exhaust flow, so an embodiment applies different set-point values depending on the amount of fuel supplied to the exhaust flow. The set-point value may therefore be caused to vary during ongoing regeneration.

The present invention is exemplified above in relation to vehicles. The invention is also applicable, however, to any means of transport in which the exhaust cleaning system as above is applicable, e.g. watercraft or aircraft with combustion/regeneration processes as above.

**Claims**

1. A method pertaining to regeneration of a particle filter (202) in a post-treatment system (200) of a vehicle (100), which particle filter (202) is adapted to treatment of an exhaust mass flow arising from combustion in a combustion engine (101) which is supplied with air for said combustion, which method comprises the steps of, during $NO_2$ based regeneration of the particle filter (202) when the vehicle (100) is stationary,

   - determining a representation of a temperature of the air supplied for the combustion,
   - determining a representation of a pressure of the air supplied for the combustion,
   - supplying unburnt fuel during said regeneration to said exhaust mass flow which arises from said combustion,
   - on the basis of said representations of temperature and pressure of said air supplied for said combustion, controlling said engine (101)so that the magnitude of the exhaust mass flow arising from the combustion substantially corresponds to a first value, which engine (101) is controlled so that the magnitude of the exhaust mass flow arising from the combustion corresponds substantially to said first value at least partly by controlling the speed of said engine (101), and
   - setting the speed of said engine (101) so that the magnitude of the exhaust mass flow arising from the combustion corresponds substantially to said first value during a first period of time during the $NO_2$ based regeneration of the particle filter (202).

2. A method according to claim 1, whereby said representation of a temperature and a pressure of the air supplied for the combustion takes the form of a representation of the air temperature and air pressure of the surroundings.

3. A method according to claim 1, whereby said representation of temperature and pressure of the air supplied for the combustion takes the form of a representation of temperature and pressure upstream of a turbo unit (220) or some other supercharging unit for pressurisation of the air supplied for the combustion.

4. A method according to any one of the foregoing claims, whereby said post-treatment system takes the form of a post-treatment system (200) of a vehicle (100) and said first value is determined before said vehicle (100) is set in motion.

5. A method according to any one of the foregoing claims, which is applied when the degree of filling of the particle filter exceeds a first level.

6. A method according to claim 1, whereby said post-treatment system (200) comprises an oxidation catalyst (205) situated upstream of said particle filter (202), and said fuel supplied to said post-treatment system is at least partly oxidised in said oxidation catalyst (205).

7. A method according to any one of the foregoing claims, whereby setting the speed of said engine (101) involves its being set on the basis of a representation of how the flow varies with the engine speed.

8. A system pertaining to regeneration of a particle filter (202) in a post-treatment system (200) of a vehicle (100), which particle filter (202) is adapted to treatment of an exhaust mass flow arising from combustion in a combustion engine (101) which is supplied with air for said combustion, which system comprises means for, during $NO_2$ based regeneration of the particle filter (202) when the vehicle (100) is stationary,

   - determining a representation of a temperature of the air supplied for the combustion,
   - determining a representation of a pressure of the air supplied for the combustion,
   - supplying unburnt fuel during said regeneration to said exhaust mass flow which arises from said combustion,
   - controlling said engine (101) so that the magnitude of the exhaust mass flow arising from the combustion substantially corresponds to a first value based on said representations of temperature and pressure of said air supplied for said combustion, which engine (101) is arranged to be controlled so that the magnitude of the exhaust mass flow arising from the combustion corresponds substantially to said first value at least partly by controlling the speed of said engine (101), and
   - setting the speed of said engine (101) so that the magnitude of the exhaust mass flow arising from the combustion corresponds substantially to said first value during a first period of time during the $NO_2$ based regeneration of the particle filter (202).

9. A vehicle (100) **characterised in that** it comprises a system according to claim 8.

**Patentansprüche**

1. Verfahren betreffend eine Regeneration eines Partikelfilters (202) in einem Nachbehandlungssystem (200) eines Fahrzeugs (100), wobei der Partikelfilter (202) zur Behandlung eines bei einer Verbrennung in einem Verbrennungsmotor (101), dem für die Verbrennung Luft zugeführt wird, entstehenden Abgasmassenstroms eingerichtet ist, wobei das Verfahren die Schritte umfasst, während einer $NO_2$-basierten Regeneration des Partikelfilters (202) bei stillstehendem Fahrzeug (100),

   - Ermitteln einer Repräsentation einer Temperatur der für die Verbrennung zugeführten Luft,
   - Ermitteln einer Repräsentation eines Drucks der für die Verbrennung zugeführten Luft,
   - Zuführen von unverbranntem Kraftstoff in den aus der Verbrennung resultierenden Abgasmassenstrom während der Regeneration,
   - auf der Basis der Repräsentationen von Temperatur und Druck der für die Verbrennung zugeführten Luft, Steuern des Motors (101) solchermaßen, dass die Menge des aus der Verbrennung resultierenden Abgasmassenstroms im Wesentlichen einem ersten Wert entspricht, wobei der Motor (101) zumindest teilweise durch Steuern der Drehzahl des Motors (101) so gesteuert wird, dass die Menge des aus der Verbrennung resultierenden Abgasmassenstroms im Wesentlichen dem ersten Wert entspricht, und
   - Einstellen der Drehzahl des Motors (101) so, dass während einer ersten Zeitdauer während der $NO_2$-basierten Regeneration des Partikelfilters (202) die Menge des aus der Verbrennung resultierenden Abgasmassenstroms im Wesentlichen dem ersten Wert entspricht.

2. Verfahren nach Anspruch 1, wobei die Repräsentation einer Temperatur und eines Drucks der für die Verbrennung zugeführten Luft die Form einer Repräsentation der Lufttemperatur und des Luftdrucks der Umgebung annimmt.

3. Verfahren nach Anspruch 1, wobei die Repräsentation einer Temperatur und eines Drucks der für die Verbrennung zugeführten Luft die Form einer Repräsentation einer Temperatur und eines Drucks stromaufwärts einer Turbogruppe (220) oder einer anderen Aufladeeinheit zur Unterdrucksetzung der für die Verbrennung zugeführten Luft annimmt.

4. Verfahren nach einem der vorhergehenden Ansprüche, wobei das Nachbehandlungssystem die Form eines Nachbehandlungssystems (200) eines Fahrzeugs (100) annimmt und der erste Wert ermittelt wird, bevor das Fahrzeug (100) in Bewegung gesetzt wird.

5. Verfahren nach einem der vorhergehenden Ansprüche, welches angewendet wird, wenn der Füllungsgrad des Partikelfilters ein erstes Niveau übersteigt.

6. Verfahren nach Anspruch 1, wobei das Nachbehandlungssystem (200) einen stromaufwärts des Partikelfilters (202) angeordneten Oxidationskatalysator (205) aufweist und der dem Nachbehandlungssystem zugeführte Kraftstoff zumindest teilweise in dem Oxidationskatalysator (205) oxidiert wird.

7. Verfahren nach einem der vorhergehenden Ansprüche, wobei das Einstellen der Drehzahl des Motors (101) beinhaltet, dass sie eingestellt wird basierend auf einer Repräsentation, wie der Strom sich mit der Motordrehzahl verändert.

8. System betreffend eine Regeneration eines Partikelfilters (202) in einem Nachbehandlungssystem (200) eines Fahrzeugs (100), wobei der Partikelfilter (202) zur Behandlung eines bei einer Verbrennung in einem Verbrennungsmotor (101), dem für die Verbrennung Luft zugeführt wird, entstehenden Abgasmassenstroms eingerichtet ist, wobei das System Mittel aufweist, während einer $NO_2$-basierten Regeneration des Partikelfilters (202) bei stillstehendem Fahrzeug (100), zum

   - Ermitteln einer Repräsentation einer Temperatur der für die Verbrennung zugeführten Luft,
   - Ermitteln einer Repräsentation eines Drucks der für die Verbrennung zugeführten Luft,

- Zuführen von unverbranntem Kraftstoff in den aus der Verbrennung resultierenden Abgasmassenstrom während der Regeneration,
- Steuern des Motors (101) solchermaßen, dass die Menge des aus der Verbrennung resultierenden Abgasmassenstroms im Wesentlichen einem ersten Wert entspricht basierend auf den Repräsentationen von Druck und Temperatur der für die Verbrennung zugeführten Luft, wobei der Motor (101) dazu angeordnet ist, zumindest teilweise durch Steuern der Drehzahl des Motors (101) so gesteuert zu werden, dass die Menge des aus der Verbrennung resultierenden Abgasmassenstroms im Wesentlichen dem ersten Wert entspricht, und
- Einstellen der Drehzahl des Motors (101) so, dass während einer ersten Zeitdauer während der NO$_2$-basierten Regeneration des Partikelfilters (202) die Menge des aus der Verbrennung resultierenden Abgasmassenstroms im Wesentlichen dem ersten Wert entspricht.

**9.** Fahrzeug (100), **dadurch gekennzeichnet, dass** es ein System nach Anspruch 8 umfasst.

**Revendications**

**1.** Procédé relatif à la régénération d'un filtre à particules (202) dans un système de post-traitement (200) d'un véhicule (100), lequel filtre à particules (202) est adapté au traitement d'un flux de masse d'échappement résultant de la combustion dans un moteur à combustion (101) qui est alimenté avec de l'air pour ladite combustion, lequel procédé comprend les étapes de, durant une régénération à base de NO$_2$ du filtre à particules (202) lorsque le véhicule (100) est stationnaire,

- la détermination d'une représentation d'une température de l'air fourni pour la combustion,
- la détermination d'une représentation d'une pression de l'air fourni pour la combustion,
- la fourniture de combustible non brûlé durant ladite régénération audit flux de masse d'échappement qui résulte de ladite combustion,
- sur base desdites représentations de température et de pression dudit air fourni pour ladite combustion, le contrôle dudit moteur (101)afin que l'amplitude du flux de masse d'échappement résultant de la combustion corresponde sensiblement à une première valeur, lequel moteur (101) est contrôlé afin que l'amplitude du flux de masse d'échappement résultant de la combustion corresponde sensiblement à ladite première valeur au moins en partie par le contrôle de la vitesse dudit moteur (101), et
- le réglage de la vitesse dudit moteur (101) afin que l'amplitude du flux de masse d'échappement résultant de la combustion corresponde sensiblement à ladite première valeur durant une première période de temps durant la régénération à base de NO$_2$ du filtre à particules (202).

**2.** Procédé selon la revendication 1, dans lequel ladite représentation d'une température et d'une pression de l'air fournies pour la combustion prend la forme d'une représentation de la température de l'air et de la pression d'air de l'environnement.

**3.** Procédé selon la revendication 1, dans lequel ladite représentation de température et de pression de l'air fournies pour la combustion prend la forme d'une représentation de température et de pression en amont d'une unité de turbo (220) ou d'une autre unité de suralimentation pour une pressurisation de l'air fourni pour la combustion.

**4.** Procédé selon l'une quelconque des revendications précédentes, dans lequel ledit système de post-traitement prend la forme d'un système de post-traitement (200) d'un véhicule (100) et ladite première valeur est déterminée avant que ledit véhicule (100) ne soit mis en mouvement.

**5.** Procédé selon l'une quelconque des revendications précédentes, qui est appliqué lorsque le degré de remplissage du filtre à particules dépasse un premier niveau.

**6.** Procédé selon la revendication 1, dans lequel ledit système de post-traitement (200) comprend un catalyseur d'oxydation (205) situé en amont dudit filtre à particules (202), et ledit carburant fourni audit système de post-traitement est au moins partiellement oxydé dans ledit catalyseur d'oxydation (205).

**7.** Procédé selon l'une quelconque des revendications précédentes, dans lequel le réglage dudit moteur (101) implique son réglage sur la base d'une représentation de la manière dont le flux varie avec la vitesse du moteur.

**8.** Système relatif à la régénération d'un filtre à particules (202) dans un système de post-traitement (200) d'un véhicule (100), lequel filtre à particules (202) est adapté au traitement d'un flux de masse d'échappement résultant de la combustion dans un moteur à combustion (101) qui est alimenté avec de l'air pour ladite combustion, lequel système comprend des moyens pour, durant la régénération sur base de $NO_2$ du filtre à particules (202) lorsque le véhicule (100) est stationnaire,

- la détermination d'une représentation d'une température de l'air fourni pour la combustion,
- la détermination d'une représentation d'une pression de l'air fourni pour la combustion,
- la fourniture de combustible non brûlé durant ladite régénération audit flux de masse d'échappement qui résulte de ladite combustion,
- le contrôle dudit moteur (101) afin que l'amplitude du flux de masse d'échappement résultant de la combustion corresponde sensiblement à une première valeur sur base desdites représentations de température et de pression dudit air fourni pour ladite combustion, lequel moteur (101) est agencé pour être contrôlé afin que l'amplitude du flux de masse d'échappement résultant de la combustion corresponde sensiblement à ladite première valeur au moins partiellement par le contrôle de la vitesse dudit moteur (101), et
- le réglage de la vitesse dudit moteur (101) afin que l'amplitude du flux de masse d'échappement résultant de la combustion corresponde sensiblement à ladite première valeur durant une première période de temps durant la régénération à base de $NO_2$ du filtre à particules (202).

9.  Véhicule (100) **caractérisé en ce qu'**il comprend un système selon la revendication 8.

FIG. 1a

100

111

113

104

102

103

108

106

101

107

105

112

200

114

EP 2 611 998 B1

# Fig. 1b

# Fig. 2

# Fig. 3

Degree of filling

350°C, low NOX

350°C

450°C, low NOX

450°C

Burn-out rate

# Fig. 4

NO2 %

Reaction rate

60

50

40

30

20

10

200     300     400     500

Temperature [C]

# Fig. 5

500

```
                                   No
                  ┌──────────────┐ ↺
          501 ───┤    Parked     │
                 │ regeneration? │
                 └──────┬────────┘
                        │ Yes
                 ┌──────▼────────┐
          502 ───┤   Determine   │
                 │  desired flow │
                 └──────┬────────┘
                        │
                 ┌──────▼────────────┐
                 │ Determine pressure│
          503 ───┤and temperature of air│
                 └──────┬────────────┘
                        │
                 ┌──────▼────────┐
          504 ───┤   Determine   │
                 │control parameters│
                 └──────┬────────┘
                        │ t=0       t<T
                 ┌──────▼────────┐ ↺
          505 ───┤ Control engine│
                 └──────┬────────┘
                        │ t>T
                 ┌──────▼────────┐
          506 ───┤     END       │
                 └───────────────┘
```

**EP 2 611 998 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20060117740 A1
- US 20030145582 A1
- EP 0389891 A